# EUROPEAN PATENT APPLICATION

(11) **EP 1 463 333 A1**
(43) Date of publication of application: **29.09.2004**
(21) Application number: 04006542.7
(22) Date of filing: 18.03.2004
(51) Int. Cl.: H04N 7/52

(54) **Apparatus and method for image, video and audio processing**

(30) Priority: 26.03.2003 JP 2003084034
(71) Applicant: NEC CORPORATION, Tokyo (JP)
(72) Inventor: Hosokawa, Satoshi, Tokyo (JP)
(74) Representative: VOSSIUS & PARTNER

(57) **Abstract**

The present invention provides a reproduction apparatus to create a file, which includes still picture images and voice in a general moving picture file format, as a single file so that still picture images and voice can simultaneously be reproduced even in a reproduction apparatus not necessary for a special format or dedicated functions.

In a recording apparatus, which has a moving picture encoder, a voice encoder and a multiplexer, a data processing part is provided between the moving picture encoder and the multiplexer. The data processing part adds still picture image data encoded by the moving picture encoder with information to allow a moving picture reproduction apparatus to continue reproduction of still picture images for a specified time in a format corresponding to the moving picture encoding scheme of the moving picture encoder and outputs it.

## Description

This invention relates to an apparatus and a method for image processing, and an image processing system using the same and program, and more particularly to an image processing method for creating a file to simultaneously perform reproduction processing for still picture images and voice.

There are cases that it is necessary to simultaneously perform reproduction processing for still picture images and voice related to them. For example, some cellular phones, which are a mobile terminal, have a camera to photograph images, and it has become required to transmit a still picture image photographed with the camera, which is added with voice that explains the still picture image, to a partner's cellular phone or PC (personal computer). In addition, in reverse, a still picture image is added with its voice and then may be transmitted from a PC to a cellular phone or another PC.

In such technology to acquire still picture images and voice information related to them, as shown in patent document 1, a moving picture signal for one frame as a still picture image and a signal, which is a voice signal to explain contents of the moving picture signal for one frame and compressed in time axis, are frequency-multiplexed, and then stored in the same area of a recording medium. Subsequently, in reproduction, the signal is stretched in time axis to recover the original voice signal and the voice signal is outputted during repetitive reproduction of themovingpicture signal, so that the explanation of still picture images and the corresponding still picture images can simultaneously be outputted.

In addition, as other methods, there is a first method, in which still picture images and voice data related to them are gathered in a single file with a specified method and then the still picture images and voice data are reproduced using a reproduction apparatus corresponding to the specified method. There is also a second method, in which still picture images and voice data related to them are handled independently each other and a dedicated function to simultaneously reproduce both of them is provided to a reproduction apparatus.

### [Patent Document 1]

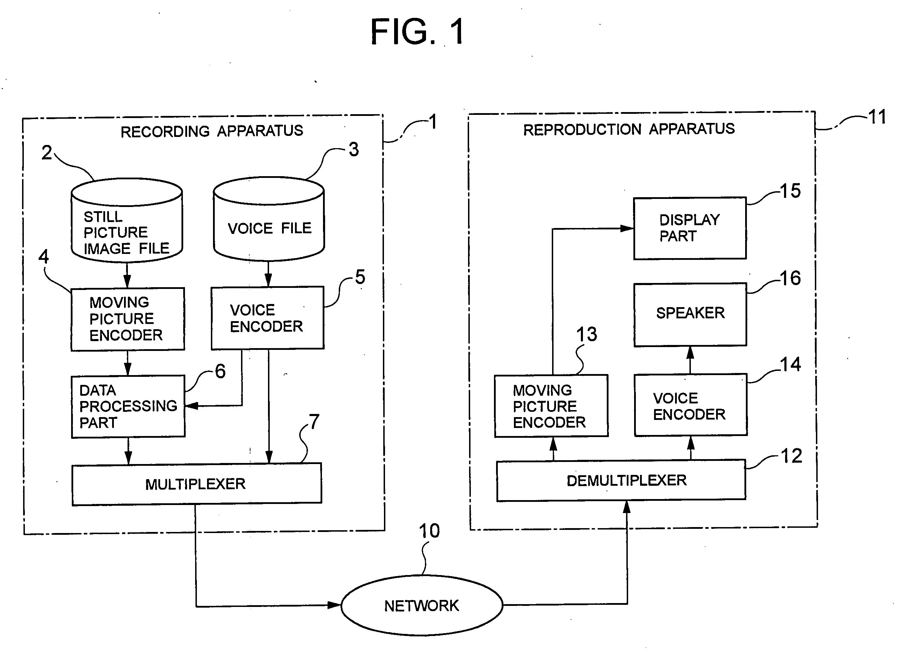

Japanese Patent Laid-Open No. 64-86364 (pp. 3, FIG. 1)

In the technology disclosed by the above-described patent document 1, when reproducing, still picture images are repetitively reproduced for a time corresponding to the reproduction time of voice signals, so that the amount of information is increased in proportion to repetition of sill picture images. Therefore, in reproduction side of the above-described cellular phone or PC, the amount of information for reproduction is increased and the problem of processing capability occurs.

In addition, for the above-described first method, a dedicated reproduction apparatus corresponding to a particular method is required. Therefore, a reproduction apparatus (reproduction apparatuses that existed in the past or others) not corresponding to the method can not perform reproduction, so that current cellular phones or PC cannot correspond.

In addition, in the above-described second method, a format that is widely used can be used for still picture image data and voice data, so that still picture images and voice can be reproduced respectively. However, in reproduction apparatuses not considered with simultaneous reproduction for them, not only simultaneous reproduction cannot be performed, but still picture imagesandvoicemayalsobehandledunsimultaneously. Therefore, the second method can not correspond to current cellular phones or PC, either.

The purpose of this invention is to provide an apparatus and method for image processing, and an image processing system therewith and programs, which can simultaneously reproduce still picture images and voice related to them even with an a reproduction apparatus not corresponding to a particular format or not provided with dedicated functions.

Another purpose of this invention is to provide an apparatus and method for image processing, and an image processing system therewith and programs, which can simultaneously reproduce still picture images and voice related to them without increasing the amount of information.

An image processing apparatus according to this invention has moving picture encoding means for encoding still picture image data with a specified moving picture encoding scheme, and data processing means for adding time extension information to extend reproduction time by the time same as that of voice data related to the still picture image data to output of the moving picture encoding means in a format corresponding to the moving picture encoding scheme. In addition, the image processing apparatus also has multiplexing means for multiplexing and outputting the output of the data processing means and the voice data.

An image processing method according to this invention has a moving picture encoding step of encoding still picture image data with a specified moving picture encoding scheme, and a data processing step of adding time extension information to extend reproduction time by the time same as that of voice data related to the still picture image data to the encoding output in a format corresponding to the moving picture encoding scheme. In addition , the image processing method also has a multiplexing step of multiplexing and outputting the output after data processing and the voice data.

An image processing system according to this invention has an image processing apparatus including moving picture encoding means for encoding still picture image data with a specified moving picture encoding scheme, data processing means for adding time extension information to extend reproduction time by the time same as that of voice data related to the still picture image data to output of the moving picture encoding means in a format corresponding to the moving picture encoding scheme, andmultiplexingmeans for multiplexing and outputting the output of the data processing means and the voice data. In addition, the image processing system also has a reproduction apparatus including moving picture decoding means for receiving multiplexed output from the image processing apparatus and decoding the data processed by the data processing means using a decoding method corresponding to the moving picture encoding scheme, and means for simultaneously reproducing the voice data of the multiplexed output and the moving picture decoding means.

The reproduction apparatus according to this invention is a reproduction apparatus to receive multiplexed output from the image processing apparatus, which includes moving picture encoding means for encoding still picture image data with a specified moving picture encoding scheme, data processing means for adding time extension information to extend reproduction time by the time same as that of voice data related to the still picture image data to output of the moving picture encoding means in a format corresponding to the moving picture encoding scheme, and multiplexing meansfor multiplexing and outputting the output of the data processing means and the voice data, and reproduce. The reproduction system includes moving picture decoding means for decoding the data processed by the data processing means using a decoding method corresponding to the moving picture encoding scheme, and means for simultaneously reproducing the voice data of the multiplexed output and the moving picture decoding means.

Programs according to this invention are programs, which allow a computer to execute image processing operations of the image processing apparatus, has a moving picture encoding step of encoding still picture image data with a specified moving picture encoding scheme, and a data processing step of adding time extension information to extend reproduction time by the time same as that of voice data related to the still picture image data to the encoding output in a format corresponding to the moving picture encoding scheme. In addition, the image processing method also has a multiplexing step of multiplexing and outputting the output after data processing and the voice data.

Hereafter, operations of this invention will be mentioned. To still picture image data encoded using a specified moving picture encoding scheme, information to allow a moving picture reproduction apparatus to continue (time extension) reproduction of the still picture image for a specified time is added in a format corresponding to the moving picture encoding scheme and to create a file. In this case, if still picture image data is only encoded, display of the still picture image is completed in a very short time in its reproduction using a moving picture reproduction apparatus. Therefore, if a moving picture file, which is acquired by multiplexing still picture image data only encoded and voice data corresponding to it, is reproduced in a moving picture reproduction apparatus, display of the still picture image and reproduction of the voice cannot simultaneously be reproduced. That is, display of the still picture image cannot be continued during reproducing the voice.

In this invention, as described above, to a still picture image encoded using a specified moving picture encoding scheme, time extension information to extend reproduction time by the time same as that of voice data is added, so that when reproducing it in a moving picture reproduction apparatus, display of the still picture image can be continued for a specified time by the time extension information added to the encoded still picture image data.

Therefore, when a moving picture file, which is acquired by multiplexing such still picture image data and voice data corresponding to it, is reproduced in a moving picture reproduction apparatus, display of the still picture image can be continued during reproducing the voice data.

### BRIEF DESCRIPTION OF THE DRAWINGS

FIG. 1 shows a structure of a recording apparatus and a reproduction apparatus according to an embodiment of this invention;
FIG. 2 shows a process of moving picture file creation according to an embodiment of this invention;
FIGS. 3A and 3B show pictures describing a general moving picture file format and a general encoding scheme;
FIGS. 4A to 4E show structure examples of reproduction time adjusted moving picture data generated in the data processing part 6 shown in FIG. 1;
FIG. 5 shows a flowchart illustrating an example of operations in the data processing part 6 of this invention;
FIG. 6 shows a flowchart illustrating another example of operations in the data processing part 6 of this invention;
FIG. 7 shows a flowchart illustrating further another example of operations in the data processing part 6 of this invention;
FIG. 8 shows a flowchart illustrating a different type of example of operations in the data processing part 6 of this invention;
FIG. 9 shows an example of correspondence of types of still picture images and moving picture encoding schemes;
FIG. 10 shows a structure of a recording apparatus according to another embodiment of this invention;
FIG. 11 shows a structure of a recording apparatus_according to further another embodiment of this invention;
FIG. 12 shows a flowchart illustrating an operation example of the data processing part 6 in the recording apparatus 1 shown in FIG. 11; and
FIGS. 13A to 13E show structure examples of reproduction time adjusted moving picture data generated according to the operation example shown in FIG. 12.

### DETAILED DESCRIPTION OF THE PREFERRED EMBODIMENTS

Hereinafter, referring to drawings, embodiments of this invention will be explained in detail. FIG. 1 shows a system structure of an embodiment of this invention. With reference to FIG. 1, a recording apparatus 1 and a reproduction apparatus 11 are connected through a network 10. The recording apparatus 1 is PC or a mobile information terminal, and the reproduction apparatus 11 is also PC or mobile information processing terminal.

The recording apparatus 1 is provided with a still picture image file 2 and a voice file 3. In addition, the recording apparatus 1 is also provided with a moving picture encoder 4, which inputs still picture image data from the still picture image file 2 and generates moving picture data, and a voice encoder 5, which inputs voice data from the voice file 3 and generates voice data corresponding to the moving picture data. Furthermore, the recording apparatus 1 is provided with a data processing part 6, which inputs output of the moving picture encoder 4 and voice reproduction time information from the voice encoder 5 and processes still picture images as moving picture data of the time length indicated by the voice reproduction time information.

The recording apparatus 1 has a function to multiplex outputs of the data processing part 6 and the voice encoder 5, or moving pictures and voice, and to generate a moving picture file. Parts other than the data processing part 6 in the recording apparatus 1 has the same structure as general moving picture recording apparatuses providedwith a function to multiplex amoving picture file and a voice file and to generate a moving picture file. Then, the multiplexed output of a multiplexer 7 is transmitted to the reproduction apparatus 11 through the network 10.

The reproduction apparatus 11 reproduces a moving picture file transmitted through the network 10, and thereby it has a demultiplexer 12, which demultiplexes multiplexed moving pictures and voice and extracts them separately. In addition, the reproduction apparatus 11 also has a moving picture decoder 13 and a voice decoder 14, which input moving pictures and voice respectively and have a decoding method corresponding to each encoding method of the moving picture encoder 4 and voice encoder 5 in the side of the recording apparatus 1. The decoding outputs are transmitted to a display part 15 and a speaker 16, and then still picture images and explaining voice corresponding to them are simultaneously reproduced.

The reproduction apparatus 11 can reproduce moving picture files with the above-described functions, however, it is a general moving picture reproduction apparatus not provided with special dedicated functions to simultaneously reproduce still picture images and voice.

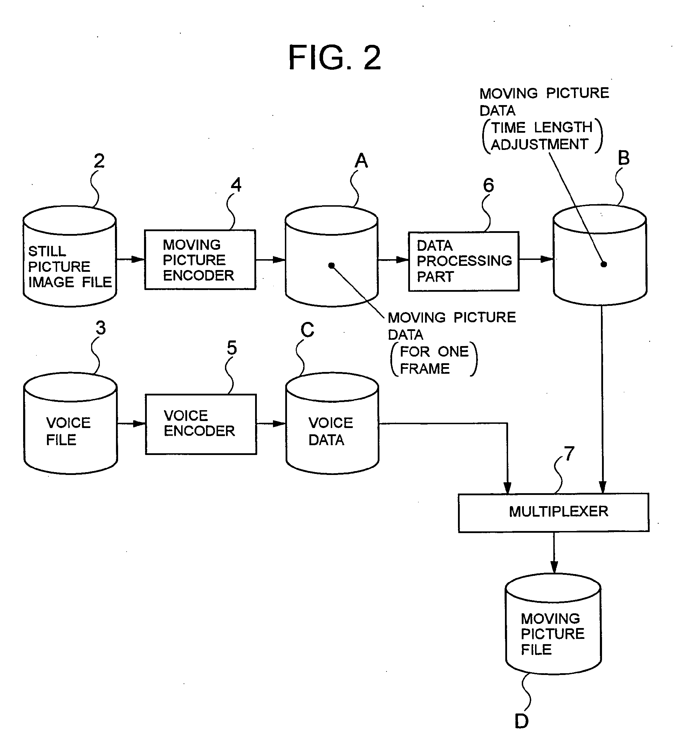

The process of generating a moving picture file in this invention is shown in FIG. 2. In FIG. 2, the same parts as FIG. 1 are shown with the same codes. Referring to FIG. 2, in the recording apparatus 1, the data processing part 6 encodes still picture images as moving pictures to create a moving picture file D. Thereby, the moving picture file, in which moving pictures are recorded for one frame, is created. That is, the still picture image data of a still picture image file 2 is inputted to the moving picture encoder 4, and then encoding for one frame is performed. Moving picture data A generated at this point is only one frame, so that reproduction time is very short (the time for one frame is 1/several ten seconds). The data A for one frame is inputted to the data processing part 6, and adjustment processing to extend its reproducing time is performed so that reproduction time of the data for one frame becomes same as that of the voice file 3. Subsequently, the processed moving picture data B and voice data C, which is acquired by encoding the voice file 3 using the voice encoder 5, are inputted into the multiplexer 7, and a moving picture file D is generated.

Using the above-described method, a moving picture file, which is generated in the recording apparatus 1, is reproduced in the reproduction apparatus 11, and then the contents of still picture images decoded by the moving picture decoder 13 are displayed on the display part 15 of the reproduction apparatus 11 and voice decoded by the voice decoder 14 is reproduced from the speaker 16. In this case, the moving picture data is only data for one frame, however, it is processed with time length (time extension) adjustment processing by the data processing part 6 so that the length of the moving picture data becomes the same as that of the moving picture file (that is, the length corresponding to reproduction time of the original voice file 3). As a result, display of the still picture images is not completed in a short time, and it is continued during reproducing the voice.

In such a way, in this invention, still picture images are encode-processed as a moving picture and the length is adjusted, and then they are multiplexed in a moving picture file. In the reproduction apparatus 11 provided with a reproducing function of moving picture files, simultaneous reproduction of still picture images and voice can be realized without adding a special function.

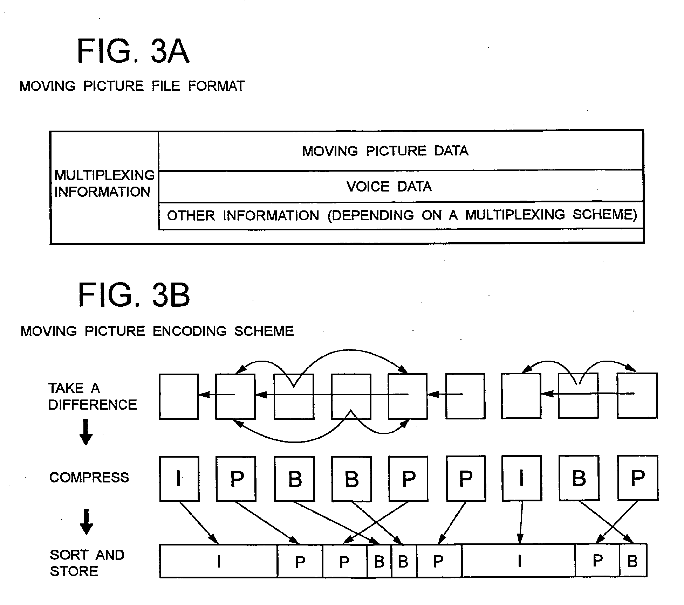

Referring to FIGS. 3A and 3B, FIG. 3A shows a format for general moving picture files. As shown in FIG. 3A, a moving picture file is basically composed of moving picture data that is a moving picture part and voice data that is a voice part. In addition, the moving picture file has multiplexing information (header), which includes information to adjust reproduction speed of moving pictures and voice, and to reproduce the moving pictures and the voice at the same timing as recording. This header also includes reproduction time information to indicate reproduction time of voice. In addition, depending on multiplexing methods, other information, such as character information, i.e., text information for captions and various command information, can also be included besides moving pictures and voice.

As general multiplexing methods, there are MP4 (MPEG-4System), ASF (advanced Streaming Format).

Moving picture data is usually encoded using a certain encoding scheme. This is because the size of moving pictures is big and they cannot easily be handled if information of each frame (it is considered as a still picture image) of the moving pictures is directly stored. Furthermore, in a general encoding scheme, encoding methods in which information of each frame is not only simply compressed but characteristics peculiar to moving pictures are also used, are used. FIG. 3B shows a general moving picture encoding scheme.

In a general encoding scheme, an encoding method, in which characteristics that there is little difference between adjacent frames in moving pictures are used, is used. Among frames that constitute moving pictures, the first frame and a frame immediately after changing a scene are compressed in the same way as still picture image. This still picture image is called as I frame (usually, I is an abbreviation of intra-coded). This I frame becomes big as the amount of data, but independent reproduction is possible.

If the difference to a just previous frame is small, it is detected and then compressed. This difference is called as P frame (usually, P is an abbreviation of predictive-coded). In this P frame, only parts that there is a difference to just previous frame are included as information, so that the size after compression becomes very small but information on just previous frame is required when reproducing.

In addition, in some encoding methods, the amount of information is further reduced by taking differences to previous and following frames and then compression may be performed. This is called as B frame (usually, B is an abbreviation of bidirectionally-predictive-coded). This B frame can make size smaller than P frame, however, information of previous and following frames is required when reproducing. Furthermore, information of previous and following frames is required when reproducing, so that frames are sorted when compressing.

Taking a difference to previous and following frames and compression methods for each frame depend on encoding schemes. Usually, a few I frames are inserted, and P frames and B frames are almost the case. As general encoding schemes, there are MPEG-2, MPEG-4Video, andH.263 (ITUT advice related to IP phone) .

As in the same way as moving picture data, voice data is also usually encoded using a certain encoding scheme. In the case of voice, voice information for a constant time is handled as a frame, and methods to compress it per frame are adopted. For the length of a frame, there is a method, in which all frames have the same length, or a method, in which the length of a frame is different every time. In many of methods, the average length of a frame is around tens of mm seconds. As general encoding schemes, there are mp3 (MPEG Audio Layer III), AAC (Advanced Audio Coding) and WMA (Windows® Media Audio).

In this invention, the above-described I frame and P frame are used for compression as an encoding scheme for moving pictures (B frame may be used or not be used).

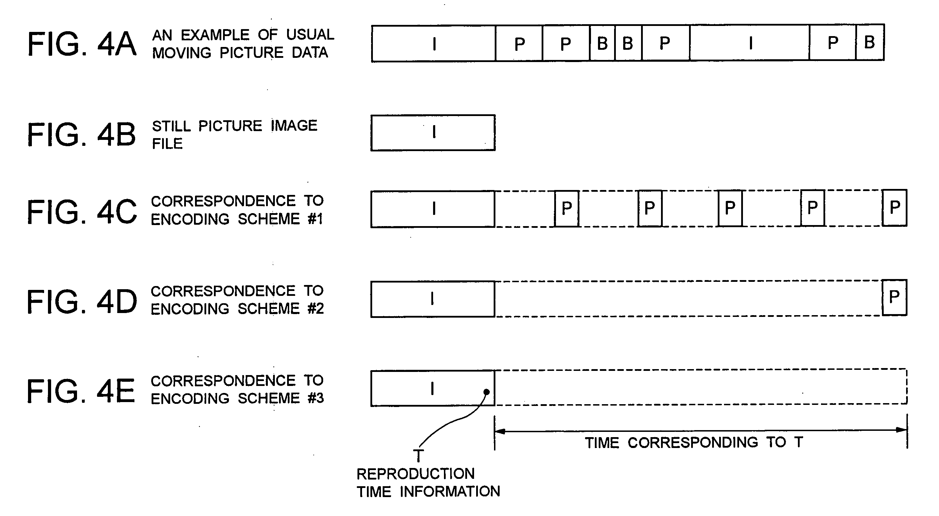

Hereinafter, operations of an embodiment of this invention will be explained in detail. As described above, in FIG. 1, parts other than the data processing part 6 have generally known structures and operations, so that their explanations in detail are omitted. Operations of only the data processing 6 will be explained. FIGS. 4A to 4E show structure examples of moving picture data, the reproduction time of which is adjusted, to be generated by the data processing part 6: FIG. 4A is an example of usual moving picture data and FIG. 4B is an example of the still picture image file 2.

In this invention, examples of reproduction time adjustment schemes for moving picture data in the data processing part 6 correspond to encoding methods in the moving picture encoder 4, and three kinds of reproduction time adjustment schemes are adopted corresponding to each of moving picture encoding schemes #1 to #3. That is, FIG. 4C is a structure example of moving picture data according to a reproduction time adjustment scheme corresponding to the encoding method #1, FIG. 4D is a structure example of moving picture data according to a reproduction time adjustment scheme corresponding to the encoding method #2 and FIG. 4E is a structure example of moving picture data according to a reproduction time adjustment scheme corresponding to the encoding method #3.

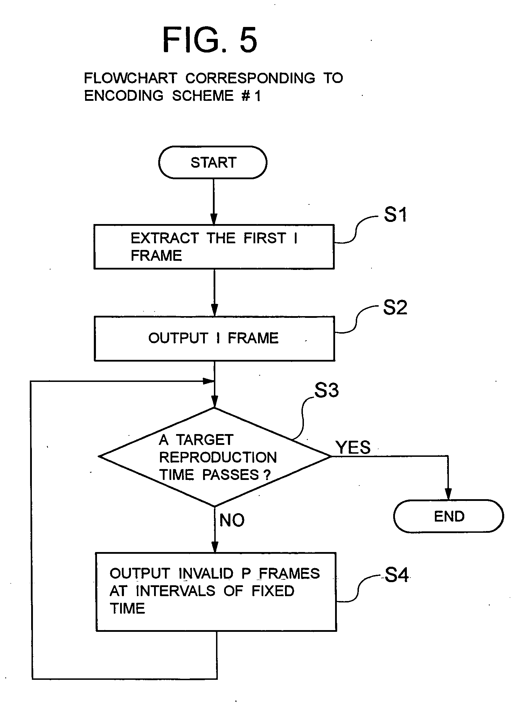

FIG. 5 shows a flowchart indicating operations of the data processing part 6, which generates a structure of moving picture data according to the reproduction time adjustment scheme corresponding to the encoding method #1 shown in FIG. 4C. At first, the first I frame is extracted from inputted moving picture data (output from the moving picture encoder 4) (step S1) . At this point, if excess information (information on time length) is included in the inputted moving picture data, it is removed. If the output of the moving picture encoder 4 is only I frame, step S1 is skipped. This embodiment corresponds to it (refer to FIG. 4B).

In the reproduction time adjustment scheme corresponding to the encoding method # 1, invalid P frame is continuously inserted. In the encoding method #1 in this case, the insertion interval of frames (insertion period) is restricted, and the insertion of specified frames at a constant period is required.

Subsequently, the I frame extracted at step S1 is outputted (step S2), and then invalid P frame is outputted at a constant period (i.e., 15 seconds intervals) (step 4) until the reproduction time of the outputted data reaches a target reproduction time (step S3).

In this case, the invalid P frame is a P frame not having substantial moving picture data. Since still picture images are encoded, in a frame following to the first I frame, a difference between frames does not exist. Therefore, P frame indicating that a difference does not exist is inserted. This P frame has the same contents not depending on the contents of moving pictures, so that it is not required to be generated in the moving picture encoder 4 and a method to output data pre-stored in memory is desirable.

Some encoding methods, such as MPEG-4Video, may have means capable of expressing invalid P frame without difference with a special short data (in the case of MPEG- 4Video, Not Coded frame) . In the case of encoding methods having such means, it is desirable to use it.

In addition, the target reproduction time is a time necessary for voice reproduction, and the voice reproduction time information is to be supplied from the voice encoder 5. When the target reproduction time is completed, the processing is completed. In a segment without data to be outputted, nothing isoutputted. An example of moving picture data, the reproduction time of which is adjusted and outputted using this method, is shown in FIG. 4C.

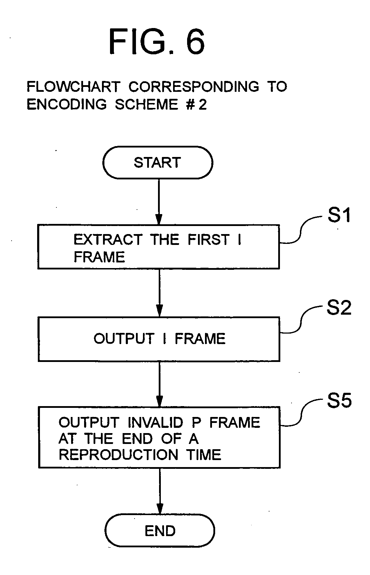

FIG. 6 shows a flowchart indicating operations of the data processing part 6, which generates a structure of moving picture data according to the reproduction time adjustment scheme corresponding to the encoding method #2 shown in FIG. 4D. At first, the first I frame is extracted from inputted moving picture data (output from the moving picture encoder 4) (step S1). At this point, if excess information (information on time length) is included in the inputted moving picture data, it is removed. If the output of the moving picture encoder 4 is only I frame, step S1 is skipped. This embodiment corresponds to it (refer to FIG. 4B).

Next, in this method, invalid P frame is inserted into the last. In the case of an encoding method, the frame insertion intervals of which are not restricted, instead of the method explained using FIG. 4C and FIG. 5 (the reproduction time adjustment scheme corresponding to the encoding method #1) , this method is desirable to be used. In this method, after the I frame extracted at step S1 is outputted (step S2), invalid P frame is inserted in the last (step S5). An example of reproduction time adjusted moving picture data that is outputted using this method is shown in FIG. 4D.

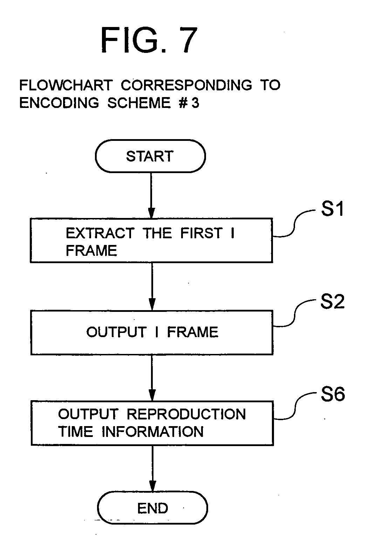

FIG. 7 shows a flowchart indicating operations of the data processing part 6, which generates a structure of moving picture data according to the reproduction time adjustment scheme corresponding to the encoding method #3. In this reproduction time adjustment scheme, without extending reproduction time with invalid P frame, reproduction time is extended by providing reproduction time as information T. The reproduction time is embedded inside of moving picture data or multiplexing information. This method can be used in the only case that it is guaranteed that a reproduction apparatus securely refers to the reproduction time information T embedded in moving picture data or multiplexing information.

In this method, after the I frame extracted at step S1 is outputted (step S2), the reproduction time information T is outputted (step S6). The method to realize step S6 depends on a place to be embedded with the reproduction time information T. In the case of embedding it in moving picture data, data outputted at step S2 is modified, and in the case of embedding it in multiplexing information, the reproduction time information T is transmitted to the multiplexer 7. An example of reproduction time adjusted moving picture data that is outputted using this method is shown in FIG. 4E.

In the side of the recording apparatus 1, a moving picture file acquired by each scheme of reproduction time adjustment shown in FIGS. 4C to 4E is outputted, so that in the side of reproduction apparatus 11, there must be provided with the moving picture decoder 13 depending on each of the moving picture encoding schemes #1 to #3 corresponding to each method of reproduction time adjustment.

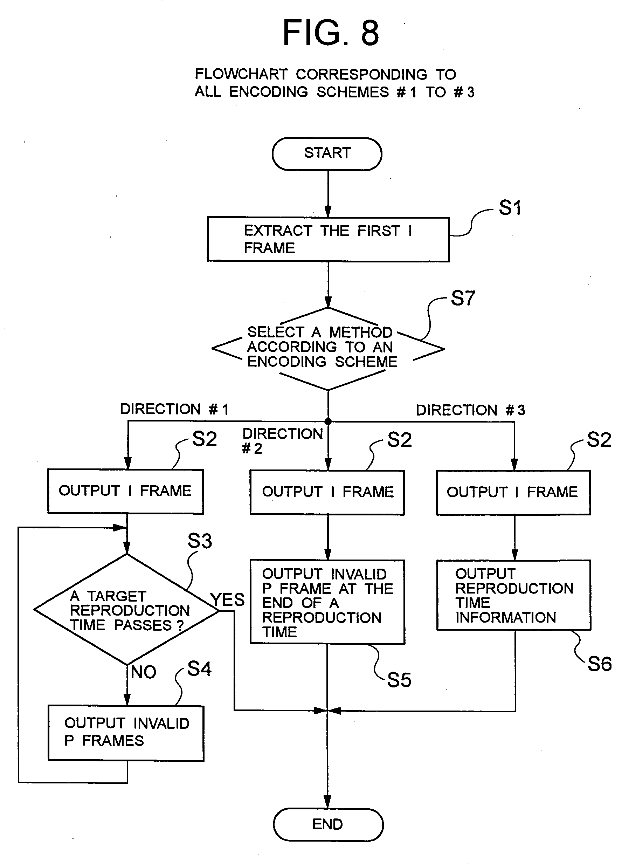

FIG. 8 is a flowchart that shows operations of the data processing part 6, indicating a reproduction time adjustment scheme corresponding to all moving picture encoding schemes #1 to #3. The same steps as shown in FIGS. 5 to 7 are indicated with the same code. In this case, after the processing at step S1 (processing for extracting the first I frame), a reproduction time adjustment scheme according to the above-described flowcharts in FIGS. 5 to 7 is selected corresponding to the encoding schemes #1 to #3 in the moving picture encoder 4. To do this, step S7 is added, and after step S7, processing corresponding to each of the schemes #1 to #3 (processing after step S3 shown in FIGS. 5 to 7) is performed.

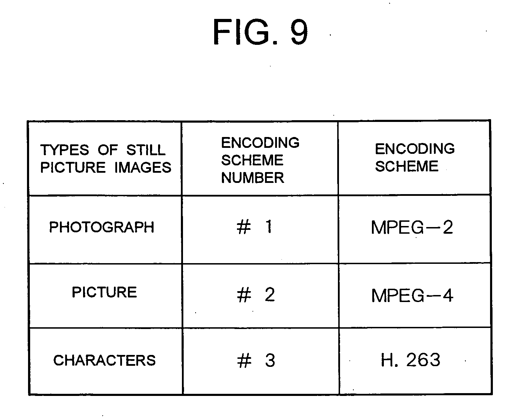

As a method for scheme selection at step S7, there are a method of specifying it from a transmitter (manual or automatic), a method of specifying it corresponding to a transmitting partner (address) , and a method of specifying it in manual or automatic corresponding to types of still picture images. As an example of methods to select a scheme corresponding to types of still picture images, schemes are pre-determined as shown in FIG. 9. For example, if a type of still picture images is photograph, MPEG-2 is selected as the encoding scheme #1, if picture, MPEG-4 is selected as the encoding scheme #2, and if characters, such as business card, letter or note, H. 263 is selected as the encoding scheme #3. However, they may not be restricted to the above-described selection.

In the recording apparatus 1 in the transmission side, information to specify either of the encoding schemes #1 to #3 is added in the header of a moving picture file, and the moving picture decoder 13 in the reproduction apparatus 11 in the receiving side reads it to determine an encoding scheme and select each method.

As described above, in the above embodiment, still picture images and voice constitute a moving picture file, so that the simultaneous reproduction function for still picture images and voice can be realized in a reproduction apparatus without specially adding the function. Thereby, as a reproduction apparatus, general moving picture reproduction apparatuses can be used as they are.

In addition, this invention can be realized by only adding functions of the data processing part 6 to a recording function for moving pictures in a recording apparatus, so that a still picture image with voice reproduction processing system is easily realized. A moving picture encoder, a voice encoder and a multiplexer, which are the same as ones that are used in a moving picture recording function, can be used.

The size (capacity) of a moving picture file created in this invention is basically almost the same as the sum of the size for I frame (one frame of still picture image) and the size of voice data, so that the data size is small. This is because occurrence of excessive data is suppressed as much as possible using that picture images do not change in time when encoding still picture images as moving pictures, and therefore, the amount of communication data is small.

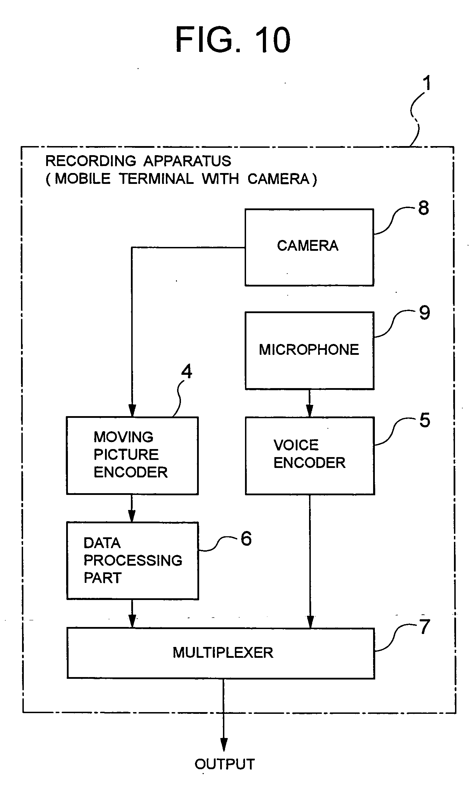

FIG. 10 is a function block diagramof the recording apparatus 1 in another embodiment of this invention, and the same parts as FIG. 1 are indicated with the same codes. In FIG. 10, this invention is applied to a mobile terminal with camera (i.e., cellular phone), and a camera 8 and a microphone 9 are provided instead of the still picture image file 2 and the voice file 3.

By directly supplying picture images photographed by the camera 8 and voice collected by the microphone 9 to the moving picture encoder 4 and the voice encoder 5 respectively, a moving picture file, which includes the moving pictures in the field (still picture images) and the voice, is generated as in the case of general photographing of moving pictures. Thereby, when photographing still picture images by a camera, voice can simultaneously recorded, and still picture images and voice can simultaneously be reproduced by reproducing a generated moving picture file in a general moving picture reproduction apparatus.

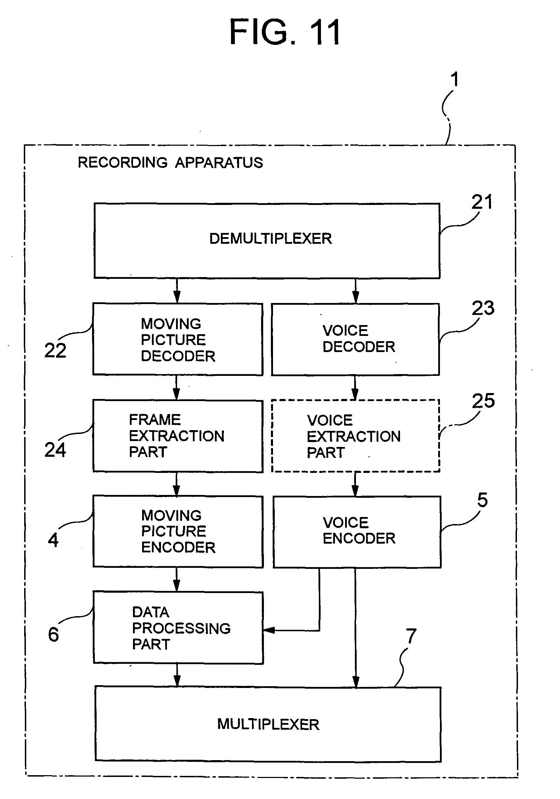

In addition, further another embodiment of this invention is shown in FIG. 11. In this embodiment, instead of storing a still picture image file and a voice file in the recording apparatus 1, functions of a reproduction apparatus is added with a demultiplexer 21, a moving picture decoder 22 and a voice decoder 23, and an arbitral moving picture file is converted to extract still picture images and voice related to them. In this embodiment, a frame extraction part 24 is provided next to the moving picture decoder 22, and for moving pictures, one frame is extracted from output of the moving picture encoder 22 as a still picture image. In this case, a frame to be extracted is considered to be a specified one, such as the first frame, the last frame or the middle frame. Thereby, still picture images and voice are extracted from an arbitral moving picture file, and a new moving picture file that stores the still picture images and the voice can be created.

That is, in the example shown in FIG. 11, moving picture to still picture image conversion is performed using the demultiplexer 21, the moving picture decoder 22 , the voice decoder 23 and the frame extraction part 24 (a voice extraction part 25), and then desired still picture images are extracted from an arbitral moving picture file. Subsequently, the extracted still picture images with voice are processed in the same way as the previous embodiment to create a moving picture file.

In addition, as shown with dotted lines in FIG. 11, the voice extraction part 25 is provided for voice and arbitral parts are extracted from output of the voice decoder 23, and then by adding processing to input them into the voice encoder 5, still picture images and voice are extracted from an arbitral position of an arbitral moving picture file to make them constitute a single moving picture file. In the case of general voice encoding schemes, voice extraction is a processing in a simple frame unit and there is no problem, so that the voice extraction part 25 performs a simple data processing.

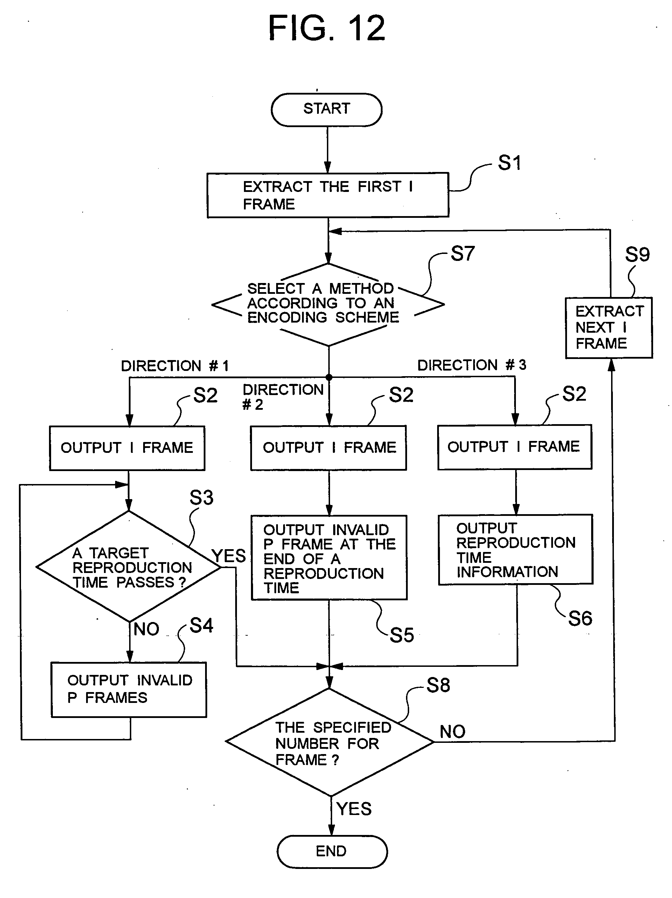

FIG. 12 shows an operation flowchart to show a different type of embodiment of this invention, and the same steps as FIG. 8 are indicated with the same codes. In this embodiment, the functions of the data processing part 6 are changed, and a plurality of still picture images can be embedded in a single moving picture file. That is, in this embodiment, the plurality of still picture images are added with voice of explanations, so that it is suitable for creating a paper picture show type file.

An example of moving picture data generated in this embodiment is shown inFIG. 13. In this embodiment, the flowchart, which indicates operations of the data processing part 6 in the recording apparatus 1, shown in FIG. 1, is added with step S8 shown in FIG. 12, and is changed so that embedding I frame is executed plural times. Furthermore, a plurality of still picture image files 2 of the recording apparatus are prepared, and then they are encoded into I frames in the moving picture encoder 4. Subsequently, I frames are sequentially taken into moving picture data in the data processing part 6.

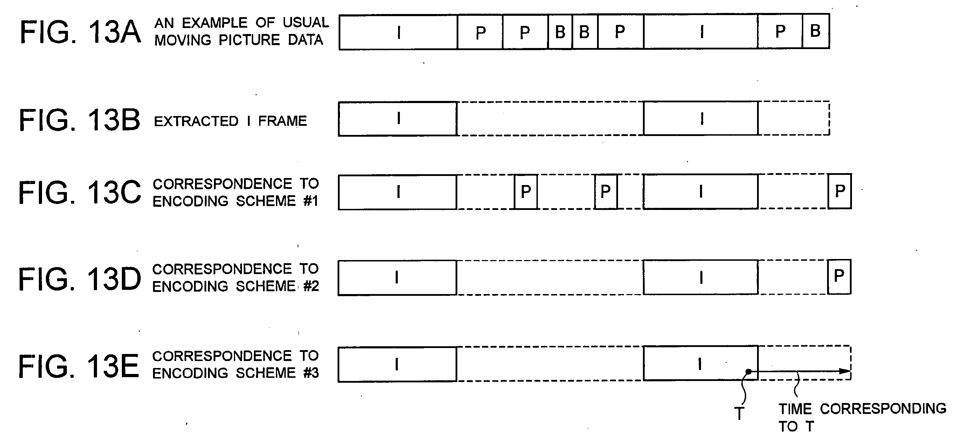

In such moving picture data, as shown in FIG. 13, a plurality of I frames are embedded into single moving picture data, and the contents of a still picture image file can sequentially be displayed like a paper picture show. For a still picture image file to be prepared, picture images continuously photographed using the continuation photography function of a camera are desirable to be used.

Alternatively, step S8 shown in FIG. 12 may also be added to each last of the flowcharts shown in FIGS. 5 to 7.

For the operations of the data processing part 6 in each of the above-described embodiments, the operation procedures are pre-stored in a recording medium as programs, and are read out and executed by a computer (CPU).

According to this invention, to still picture image data encoded using a specified moving picture encoding scheme, information to allow a moving picture reproduction apparatus to continue reproduction of the still picture images for a specified time is added in a format corresponding to the moving picture encoding scheme and to create a file, so that if this file is reproduced in the moving picture reproduction apparatus, display of the still picture images can be continued for a specified time using the information added to the still picture image data which is encoded. As a result, if a moving picture file, which is acquired by multiplexing this file with voice data corresponding to this, is reproduced in the moving picture reproduction apparatus, display of the still picture images can be continued during reproducing the voice.

That is, in the side of a reproduction apparatus, still picture images with voice can be reproduced without adding a special still picture image reproduction function. In addition, the amount of data basically becomes the sum of data for one frame and voice data, so that it is very small and the amount of transmission data from the side of a recording apparatus to the side of a reproduction apparatus becomes small. Also, convergence of a communication network does not occur, and processing in the side of a reproduction apparatus can be speeded up.

## Claims

1. An image processing apparatus comprising:
moving picture encoding means for encoding still picture image data with a specified moving picture encoding scheme; data processing means for adding time extension information to extend reproduction time by the time same as that of voice data related to said still picture image data to output of said moving picture encoding means in a format corresponding to said moving picture encoding scheme; and
multiplexing means for multiplexing and outputting the output of said data processing means and said voice data.

2. The image processing apparatus according to claim 1 further comprising:
voice encoding means for encoding said voice data with a specified voice encoding scheme.

3. The image processing apparatus according to claim 1 or 2, wherein
said data processing means receives information on reproduction time of said voice data acquired by said voice encoding means and acquires said time extension information.

4. The image processing apparatus according to any one of claims 1 to 3, wherein
said data processing means extracts data for one frame corresponding to said still picture image data from output of said moving picture encoding means, and has first means for adding invalid frames following the data for a time corresponding to reproduction time of said voice data at a specified period as said time extension information.

5. The image processing apparatus according to any one of claims 1 to 3, wherein
said data processing means extracts data for one frame corresponding to said still picture image data from output of said moving picture encoding means, and has second means for adding invalid frames after a time corresponding to reproduction time of said voice data as said time extension information.

6. The image processing apparatus according to any one of claims 1 to 3, wherein
said data processing means extracts data for one frame corresponding to said still picture image data from output of said moving picture encoding means, and has third means for adding said time extension information to the extracted data.

7. The image processing apparatus according to any one of claims 1 to 6, wherein
said data processing means comprises:
extraction means for extracting data for one frame corresponding to said still picture image data from output of said moving picture encoding means;
first means for adding invalid frames following the data for a time corresponding to reproduction time of said voice data at a specified period as said time extension information;
second means for adding invalid frames after a time corresponding to reproduction time of said voice data as said time extension information;
third means for adding said time extension information to the extracted data; and
selection means for selecting either of the first to third means.

8. The image processing apparatus according to any one of claims 4 to 7, wherein
said data processing means further comprises means for continuing control for processing of said first, second or third means a specified times after completing processing of said first , second or third means.

9. The image processing apparatus according to any one of claims 1 to 8, further comprising:
a camera to generate said still picture image data; and
a microphone to generate said voice data.

10. The image processing apparatus according to any one of claims 1 to 9, wherein
said image processing apparatus is a cellular phone.

11. The image processing apparatus according to any one of claims 1 to 10, further comprising:
means for extracting desired still picture image data and voice data related to it from moving picture data added with voice data, wherein
the extracted still picture image data is supplied to said data processing means.

12. An image processing method comprising:
a moving picture encoding step for encoding still picture image data with a specified moving picture encoding scheme;
a data processing step for adding time extension information to extend reproduction time by the time same as that of voice data related to said still picture image data to output of said moving picture encoding means in a format corresponding to said moving picture encoding scheme; and
a multiplexing step for multiplexing and outputting the output after data processing and said voice data.

13. The image processing method according to claim 12 further comprising:
a voice encoding step for encoding said voice data with a specified voice encoding scheme.

14. The image processing method according to claim 12 or 13, wherein
said data processing step receives information on reproduction time of said voice data acquired by said voice encoding step and acquires said time extension information.

15. The image processing method according to any one of claims 12 to 14, wherein
said data processing step extracts data for one frame corresponding to said still picture image data from output of said moving picture encoding step, and has a first step for adding invalid frames following the data for a time corresponding to reproduction time of said voice data at a specified period as said time extension information.

16. The image processing method according to any one of claims 12 to 14, wherein
said data processing step extracts data for one frame corresponding to said still picture image data from output of said moving picture encoding step, and has a second step for adding invalid frames after a time corresponding to reproduction time of said voice data as said time extension information.

17. The image processing method according to any one of claims 12 to 14, wherein
said data processing step extracts data for one frame corresponding to said still picture image data from output of said moving picture encoding step, and has a third step for adding said time extension information to the extracted data.

18. The image processing method according to any one of claims 12 to 17, wherein
said data processing step comprises:
an extraction step for extracting data for one frame corresponding to said still picture image data from output of said moving picture encoding step;
a first step for adding invalid frames following the data for a time corresponding to reproduction time of said voice data at a specified period as said time extension information;
a second step for adding invalid frames after a time corresponding to reproduction time of said voice data as said time extension information;
a third step for adding said time extension information to the extracted data; and
a selection step for selecting either of the first to third steps.

19. The image processing method according to any one of claims 15 to 18, wherein
said data processing step further comprises a step for continuing control for processing of said first, second or third step a specified times after completing processing of said first , second or third step.

20. The image processing method according to any one of claims 12 to 19, further comprising:
a step for generating said still picture image data through a camera; and
a step for generating said voice data through a microphone.

21. The image processing method according to any one of claims 12 to 20, wherein
a cellular phone is used.

22. The image processing method according to any one of claims 12 to 21, further comprising:
a step for extracting desired still picture image data and voice data related to it from moving picture data added with voice data, wherein
the extracted still picture image data is supplied to said data processing step.

23. An image processing system comprising:
an image processing apparatus including:
moving picture encoding means for encoding still picture image data with a specified moving picture encoding scheme;
data processing means for adding time extension information to extend reproduction time by the time same as that of voice data related to the still picture image data to output of the moving picture encoding means in a format corresponding to the moving picture encoding scheme; and
multiplexing means for multiplexing and outputting the output of the data processing means and the voice data, and
a reproduction apparatus including:
moving picture decoding means for receiving multiplexed output from the image processing apparatus and decoding the data processed by the data processing means using a decoding method corresponding to the moving picture encoding scheme; and
means for simultaneously reproducing the voice data of the multiplexed output and the moving picture decoding means.

24. A reproduction apparatus, which receives and reproduces multiplexed output from an image processing apparatus that includes:
moving picture encoding means for encoding still picture image data with a specified moving picture encoding scheme;
data processing means for adding time extension information to extend reproduction time by the time same as that of voice data related to the still picture image data to output of the moving picture encoding means in a format corresponding to the moving picture encoding scheme; and
multiplexing means for multiplexing and outputting the output of the data processing means and the voice data,
comprising:
moving picture decoding means for decoding the data processed by the data processing means using a decoding method corresponding to the moving picture encoding scheme; and
means for simultaneously reproducing the voice data of the multiplexed output and the moving picture decoding means.

25. Programs, which are computer-readable and allow a computer to execute image processing operations of an image processing apparatus, comprising:
a moving picture encoding step for encoding still picture image data with a specified moving picture encoding scheme;
a data processing step for adding time extension information to extend reproduction time by the time same as that of voice data related to said still picture image data to output of said moving picture encoding means in a format corresponding to said moving picture encoding scheme; and
a multiplexing step for multiplexing and outputting the output after data processing and said voice data.
